# EUROPÄISCHE PATENTSCHRIFT

(11) **EP 2 146 938 B1**
(45) Veröffentlichungstag und Bekanntmachung des Hinweises auf die Patenterteilung: **13.07.2011**
(21) Anmeldenummer: 08759857.9
(22) Anmeldetag: 21.05.2008
(51) Int. Cl.: C04B 18/00

(54) **VERFAHREN ZUR HERSTELLUNG EINES ZUSCHLAGSTOFFS FÜR DIE HERSTELLUNG VON BAUMATERIALIEN**
METHOD FOR PRODUCING AN AGGREGATE FOR PRODUCING BUILDING MATERIALS
PROCÉDÉ DE PRODUCTION D'UN AGRÉGAT DESTINÉ À LA PRODUCTION DE MATÉRIAUX DE CONSTRUCTION

(30) Priorität: 21.05.2007 AT 7912007
(43) Veröffentlichungstag der Anmeldung: 27.01.2010
(73) Patentinhaber: Technische Universität Wien, 1040 Wien (AT)
(72) Erfinder: BARTL, Andreas, A-1180 Wien (AT); WISTUBA, Michael, A-1180 Wien (AT); MARINI, Ingo, A-7571 Rudersdorf (AT); SPIEGL, Markus, A-1200 Wien (AT); BLAB, Ronald, A-2103 Langenzersdorf (AT)
(74) Vertreter: Babeluk, Michael
(86) Internationale Anmeldenummer: PCT/EP2008/056255
(87) Internationale Veröffentlichungsnummer: WO 2008/142107

(56) Entgegenhaltungen:
- EP-A- 0 669 292
- EP-A- 0 863 114
- WO-A-02/34399
- AT-B- 413 355
- DE-C1- 19 511 278

## Beschreibung

Die Erfindung betrifft ein Verfahren zur Herstellung eines Zuschlagstoffs für die Herstellung von Baumaterialien, bei dem ein Ausgangsmaterial, das mindestens eine faserhaltige Altstofffraktion enthält, von Schwerstoffen befreit und zerkleinert wird, um einen im Wesentlichen rieselfähigen Zuschlagstoff zu erhalten.

Weltweit, und insbesondere innerhalb der EU, werden in letzter Zeit vermehrt Verfahren entwickelt, die die Vermeidung und/oder die Reduktion von Abfall zum Ziel haben. Dies geschieht nicht nur durch ein gesteigertes Umweltbewusstsein der Bevölkerung, sondern auch durch entsprechende gesetzliche Rahmenbedingungen.

Für viele Produkte existieren daher mehr oder weniger geschlossene Kreislaufsysteme, wobei das Produkt selbst, der Werkstoff oder der Rohstoff wieder verwendet wird. Für komplexere Stoffe, wie etwa Verbundmaterialien und insbesondere Verbraucherprodukte, wie Haushalts- und Küchengeräten, Kraftfahrzeuge oder elektronische Geräte, sind jedoch bislang noch kaum derartige Kreislaufprozesse realisiert.

Eine Möglichkeit, komplex zusammengesetzte Abfälle zumindest teilweise zu nutzen, besteht in der Zerkleinerung der Abfälle in Shredderanlagen. Dabei werden sperrige Abfälle, von Altautos, über Herde, Waschmaschinen, Geschirrspüler bis zu leichtem Mischschrott wie Fahrräder und Bettgestelle, zerkleinert. Nach der Zerkleinerung werden die magnetisierbaren Teile (Eisen-Fraktion) sowie nichtmagnetisierbare Metalle (NE-Fraktion: Aluminium, Kupfer) zur Wiederverwertung abgetrennt. Diese Verfahren sind seit langem Stand der Technik (H. Motek, Aufbereitungs-Technik 16(8), 387-392, 1975).

Der Nachteil beim Aufbereiten von Abfällen in Shredderanlagen liegt darin, dass neben der Metallfraktionen, bzw. der so genannten Shredderschwerfraktion, ein Shredderabfall, die so genannte Shredderleichtfraktion, anfällt, die deponiert oder, primär aufgrund gesetzlicher Regelungen, verbrannt werden muss. Wie aus der Literatur bekannt ist, beträgt der Anteil dieses Shredderabfalls rund 25 % (T. Geiger, H. Baumgartner, H. Seifert, I. Dorn, H. Knopf, Chem.-Ing.-Techn. 65(4), 444-446, 1993).

Einen Sonderfall stellen Altautos dar. Innerhalb der EU regelt die Richtlinie 2000/53/EG des Europäischen Parlaments und des Rates vom 18. September 2000 die Verwertung von Altkraftfahrzeugen. In dieser Richtlinie werden verbindliche Recyclingquoten festgelegt. Dabei ist zu beachten, dass nur ein kleiner Anteil der Altkraftfahrzeuge thermisch genutzt werden darf, der überwiegende Teil muss einer Wiederverwendung bzw. einem stofflichern Recycling zugeführt werden. Ähnliche Verordnungen existieren auch für andere Produkte. So müssen gemäß der Richtlinie 2002/96/EG (WEEE-Richtlinie) mindestens 4 kg Elektronikschrott pro Einwohner und Jahr rezykliert werden.

Die Erreichung dieser Quoten stellt eine große Herausforderung dar. Durch die zunehmende Verwendung von Leichtbauteilen im Automobilbau wird der Anteil an Stahl laufend geringer, während gleichzeitig der Einsatz von Kunststoffen und Verbundwerkstoffen zunimmt. Die ausschließliche Verwertung von Eisen und Stahl sowie Nicht-Eisenmetallen aus der Aufbereitung von Altkraftfahrzeugen kann die in der Richtlinie 2000/53/EG geforderten Quoten nicht erreichen. Es ist daher unbedingt notwendig, neue, derzeit nicht verfügbare Verwertungsmöglichkeiten zu entwickeln.

Gemäß dem Stand der Technik werden die Shredderabfälle thermisch verwertet bzw. entsorgt, falls eine Deponierung aus gesetzlichen Gründen nicht mehr möglich ist (Deponierungsverbot). Zu den klassischen Verfahren der thermischen Abfallbehandlung zählen die Pyrolyse, die Vergasung und die Verbrennung. Beispielsweise beschreiben die Druckschriften CH 685377 A, DE 20 52 578 A, DE 24 36 549 A, EP 0 588 814 A, US 3,917.239 A, US 4,014.681 A, WO 98/054399 A den Stand der Technik, Shredderabfälle mittels thermischen Verfahren aufzubereiten. Darüber hinaus gibt es noch das TwinRec Verfahren (z.B.: EP 0 676 464 A, EP 0 803 562 A), das RESHMENT Verfahren (z.B.: EP 0 940 166, EP 1 064 982) und das Thermoselect Verfahren (z.B.: DE 41 30 416 A), die als spezielle thermische Verfahren anzusehen sind. Diese Verfahren sind technisch sehr aufwendig und können auch keine ausreichend hohe Verwertung erzielen, wie etwa in der Richtlinie 2000/53/EG verlangt wird.

Neben den beschriebenen, thermischen Verfahren, sind gemäß dem Stand der Technik auch mechanische Verfahren möglich, um Altstoffe, wie Altkraftfahrzeuge, Altelektronikgeräte sowie braune und weiße Ware zu verwerten.

In einigen Druckschriften sind Verfahren angeführt, die das Auseinandernehmen von Altkraftfahrzeugen vor dem Shreddern zwecks Gewinnung von wieder verwertbaren Teilen beschreiben, wie Beispielsweise in DE 197 24 211 A, DE 36 40 501 A, DE 39 40 959 A, DE 40 19 312 A, DE 40 29 618 A, DE 41 43 251 A oder DE 42 12 299 A. Keines dieser Verfahren hat jedoch eine kommerzielle Bedeutung erlangt. Tatsächlich werden aus wirtschaftlichen Gründen nur relativ wenige Komponenten aus Altkraftfahrzeugen oder anderen Altstoffen (Altelektrogeräte) vor dem Shreddern entfernt.

Im Allgemeinen werden deshalb aus Altkraftfahrzeugen nur die aus Umweltschutzgründen notwendigen Komponenten entfernt (z.B.: Kraftstoff, Öle, Bleiakkumulatoren). Anschließend werden die Karossen gemeinsam mit Altelektronikgeräten sowie brauner und weißer Ware oder ähnlichen Abfällen geshreddert. Dabei können bei relativ geringem Energieaufwand wieder verwertbare Fraktionen durch mechanische Separationsverfahren (Sichten) oder auch andere Trennverfahren gewonnen werden. Diese Technologie entspricht seit einiger Zeit dem Stand der Technik (A. Melin, Erzmetall 25/2, 1972, 290-295; DE 32 35 163 A, DE 19 18 123 A, DE 15 07 557 A, EP 0 403 695 A).

Weiters zeigen die DE 195 11 278 A, die EP 863 114 A und die DE 4439656 A Verfahren, die die Verwendung von Shredderabfällen zur Herstellung von Baumaterialien umfassen.

Als Shredder bezeichnet man allgemein Zerkleinerungsaggregate, die ähnlich einem Hammerbrecher funktionieren. Sie sind besonders zur Zerkleinerung von Sekundärrohstoffen geeignet. Üblicherweise unterscheidet man Shredder mit horizontal einerseits und vertikal angeordnetem Rotor andererseits. Shredder mit horizontal gelagerten Rotor weisen zumeist einen Rost auf, der klassischer Weise unterhalb des Rotors angeordnet ist. Die Bauform derartiger Shredder ist direkt von einem Hammerbrecher abgeleitet und seit Jahrzehnten Stand der Technik. Eine Weiterentwicklung stellt das oft als "Lindemann-Newell-Shredder" bezeichnete Aggregat dar, bei dem der Rost oberhalb des Rotors angeordnet ist. Weiters gibt es noch Sonderbauformen, die primär die Anordnung des Rostes betreffen, wie etwa den "Becker". Shredder mit vertikal gelagertem Rotor verfügen zumeist über keinen Austragsrost (z.B.: Herschel-Mühle) und sind primär für vorzerkleinertes Gut und geringe Durchsätze geeignet.

In der Praxis werden Shredder unter anderem zur Aufbereitung folgender Materialien verwendet:
- Automobile
- Stahlleichtschrott (z.B.: Haushaltsgeräte, Fahrräder und Bettgestelle)
- Aluminiumschrott
- Elektrischer und elektronischer Geräte
- Sperrmüll (z.B.: Möbel aus Haushalt und Garten, Badewannen, Bodenbeläge, Teppiche)

Das mittels Shredder zerkleinere Material weist im Allgemeinen eine Korngröße von unter 150 mm aus, bietet günstige Vorraussetzungen für eine Trennung und verfügt über gute Fördereigenschaften.

Obwohl Shredderabfälle relativ hohe Anteile an Kunststoffen enthalten, sind Verfahren zur Rückgewinnung von Kunststoffen wirtschaftlich nicht konkurrenzfähig. Da zumeist Altkraftfahrzeuge gemeinsam mit anderen Abfällen, wie Elektronikgeräte oder brauner und weißer Ware aufbereitet werden, enthält Shredderabfall eine Vielzahl unterschiedlicher Kunststoffe. Shredderabfall aus Altelektrogeräten beinhaltet bis zu 12 verschiedene Sorten Kunststoff. Diese können noch Flammschutzmittel enthalten, wobei wiederum eine große Anzahl verschiedener Flammschutzmittel eingesetzt werden. Bei Shredderabfall aus unterschiedlicher Provenienz wird die Zusammensetzung noch komplexer, da vor allem im Automobilbau vielfach faserverstärkte Kunststoffe eingesetzt werden. Trotz einer aufwändigen und somit teuren Trennung der Kunststoffe, werden nur minderwertige Sekundärrohstoffe erhalten. Der Erlös, der mit diesen aufbereiteten Abfällen erzielt werden kann, ist somit sehr gering und rechtfertigt im Allgemeinen nicht die aufwendige Aufbereitung.

Neben den bisherigen Methoden, die für verschiedene Abfälle geeignet sind, wurden in den letzten Jahren auch Verfahren entwickelt, die im Speziellen die Aufbereitung von Altkraftfahrzeugen, Altelektronikgeräte, brauner und weißer Ware oder ähnlichen Abfallstoffen zum Ziel haben. Konkret sind folgende Verfahren zu nennen:
- SRTL Verfahren (z.B.: EP 0 918 606 A, US 6,460.788 A, WO 2004/004997 A)
- SiCon Verfahren (z.B.: DE 100 53 487 A, DE 100 53 488 A, DE 100 53 491 A, DE 100 53 492 A, EP 0 912 310 A)
- SALYP Verfahren (z.B.: WO 03/090941 A, WO 2004/041452 A, EP 1 090 727 A, BE 1 014 797 A)
- WESA SLF Verfahren (z.B.: H.P. Sattler, B. Laage, In: R'2000 : Recovery, Recycling, Re-Integration; Proc. of the 5th World Congress on Integrated Resources Management, Toronto, Kanada, 5.-9. Juni, 2000; E. Pruckner, Tagung "Autorecycling in Europa - Chancen und Risken", Rüsselsheim, Deutschland, 3.-4. Mai 2000).

Neben den oben beschriebenen Verfahren gibt es noch zahlreiche weitere Druckschriften, die den Stand der Technik zur Aufbereitung von Shredderabfällen beschreiben. Mittels all dieser Verfahren ist es möglich, noch weitere Wertstoffe, insbesondere Eisen und Nicht-Eisenmetalle aus dem Shredderabfall zu gewinnen. Dabei werden zumeist keine Angaben über die Verwendung der anderen Fraktionen gemacht, bzw. werden diese Anteile für thermische Verwertung oder Beseitigung genutzt. Eine Erfüllung der in der Richtlinie 2000/53/EG geforderten Recyclingquoten ist somit nicht möglich.

Es ist ferner bekannt, dass im Zuge des Recyclings von Altreifen eine Flusenfraktion anfällt, für die durch entsprechende Aufbereitung eine Reihe von Anwendungen im Baustoffbereich offen steht (AT 413 355 B). Im Vergleich zur Verbrennung, für die ein Entsorgungsbeitrag fällig ist, kann somit aus einem ursprünglich als Abfall zu bezeichnenden Material ein Erlös gewonnen werden. Als Einsatzgebiet für den gemäß AT 413 355 B aufbereiteten Abfall kommen vor allem Baustoffe auf Bitumenbasis in Frage. Durch die Verwendung der Flusenfraktion aus dem Altreifenrecycling können teure, neue Rohstoffe substituiert werden. Nachteilig an dieser Methode ist zum einen, dass sie ausschließlich für Elastomerprodukte geeignet ist. Zum anderen besteht die aufbereitete Fraktion zum überwiegenden Teil aus Fasern und kann somit nur einen Teil möglicher Zusatzstoffe für Baustoffe auf Beton- und Bitumenbasis substituieren.

Aufgabe der vorliegenden Erfindung ist es, die obigen Nachteile zu vermeiden und ein Verfahren vorzuschlagen, das eine stoffliche Verwertung von Altmaterialien ermöglicht und gleichzeitig einen hochwertigen Zuschlagstoff für die Herstellung von Baumaterial als Produkt ergibt.

Erfindungsgemäß ist vorgesehen, dass als Ausgangsmaterial eine Shredderleichtfraktion verwendet wird und dass der Faseranteil zwischen 3% und 45%, vorzugsweise zwischen 5% und 25% und besonders vorzugsweise zwischen 7% und 12% eingestellt wird und dass ein Massenanteil zwischen 2% und 25%, vorzugsweise zwischen 2% und 10%, und besonders vorzugsweise zwischen 3% und 8% eines feinkörnigen anorganischen Zusatzmaterials mit einer Korngröße von weniger als 750 µm eingestellt wird.

Wie bereits oben ausgeführt, kann nach dem Vorgang des Shredderns die sogenannte Shredderleichtfraktion abgetrennt werden. Diese wird im Allgemeinen über einen Sichter abgezogen. Es können zur Trennung auch Zick-Zack-Sichter, Siebmaschinen, Trenntische oder andere Aggregate eingesetzt werden. In der gereinigten Schwerfraktion verbleiben überwiegend Fe-Schrott und andere Metalle. Die Shredderleichtfraktion ist eine heterogene Mischung aus Kunststoffen und Elastomeren, enthält aber auch andere organische und anorganische Materialien. Der Heizwert liegt im Mittel bei 14 MJ/kg, wobei aufgrund der Inhomogenität der SLF große Schwankungen möglich sind. Der Feinkornanteil (< 10 mm) liegt bei rund 50 %, auch in diesem Fall kann dieser Wert stark streuen. Die stoffliche Zusammensetzung sowie die chemisch-physikalischen und die mechanischen Eigenschaften sind stark von der Zusammensatzung der Vormaterialien und der Maschinenparameter abhängig und variieren innerhalb extrem großer Bandbreiten.

Der Ausdruck Faser ist in der Fachliteratur nicht eindeutig definiert. Eine, aus Sicht des wichtigsten Faserverbrauchers - die Textilindustrie - erstelle Definition (DIN 60001), bezeichnet Fasern als linienförmige Partikel, die sich textil verarbeiten lassen. Eine exakte Definition von Länge, Durchmesser und Verhältnis Länge/Durchmesser findet sich nicht. Üblicherweise werden Fasern im Längenbereich von 20 bis 90 mm zu Textilien versponnen. Fasern mit geringeren Längen können zu Vliesstoffen verarbeitet werden. Auch in der Papier- und Zellstoffindustrie werden faserförmige Partikel eingesetzt, wenngleich in diesem Bereich die geometrischen Abmessungen der Fasern deutlich darunter liegen.

Eine umfassendere Definition erfolgt durch die BISFA (Bureau International pour la Standardisation des Fibres Artificielles), die Faser als morphologische Bezeichnung für solche Stoffe definiert, die sich durch ihre Flexibilität, Feinheit und großes Verhältnis von Länge zu Querschnittfläche auszeichnen (BISFA; Terminology of man-made fibers, 2000). Dadurch werden Fasern klar von Stäben (keine ausreichende Flexibilität) und Drähten (keine ausreichende Feinheit) abgegrenzt. Auch in der BISFA finden sich keine klar definierten Abmessungen bzw. Grenzwerte. Darüber hinaus spezifiziert BISFA noch folgende weiteren Begriffe:
- Fibrille: bezeichnet eine Aufgliederung einer Faser; diese kann an der Faser anhaften oder lose sein.
- Faserstaub: Fasern oder Teile von Fasern, die als Luftschwebstoff vorliegen; sie sind für das menschliche Auge als Fasern erkennbar.
- Flock: sehr kurze Fasern, die für andere Zwecke als Spinnen vorsätzlich hergestellt wurden.
- Stapelfaser: textile Faser mit endlicher Länge, die verspinnbar ist.
- Filament: Faser mit sehr großer, als unendlich gesehener, Länge.

Fixe Grenzwerte für Fasergeometrien existieren bislang nur im Bereich von lungengängigen Fasern, die als die Gesundheit gefährdend eingestuft sind. Gemäß verschiedener Richtlinien (z.B. TRGS 521) werden solche Fasern als lungengängig bezeichnet, die alle drei folgenden Kriterien erfüllen:
- Die Faserlänge liegt über 5 µm.
- Der Faserdurchmesser liegt unter 3 µm.
- Das Verhältnis Faserlänge/Faserdurchmesser liegt über 3.

Da es keine verbindlichen oder genormten Vorschriften für die Bezeichnung Faser gibt, wird Faser im Zusammenhang mit dem erfindungsgemäßen Zuschlagstoff als Partikel bezeichnet, das ein Verhältnis von Länge zu Durchmesser von 10 oder darüber aufweist. Bei Fasern mit rundem oder annähernd rundem Querschnitt kann dabei der Durchmesser der Faser direkt verwendet werden. Bei Faserquerschnitten, die deutlich von einer Kreisform abweichen, ist es notwendig, den Kreisdurchmesser zu berechnen, der die gleiche Fläche aufweist, wie die Querschnittsfläche der Faser. Dabei werden nur solche Partikel als Faser betrachtet, die neben dem Verhältnis von Länge zu Durchmesser von 10 oder darüber auch einen Durchmesser im Bereich von 5 bis 80 µm aufweisen. Bei nicht runden Querschnitten ist der Durchmesser des dem Faserquerschnitt entsprechenden gleichflächigen Kreises heranzuziehen. Fasern mit Durchmessern unter 5 µm sind zu vermeiden, da diese Fasern keinen positiven Effekt auf die Qualität der erfindungsgemäß gefertigten Endprodukte zeigen.

Neben der Schwierigkeit einer Definition von Fasern verursacht auch die morphologische Analyse von Fasern erhebliche Probleme. Es ist unbestreitbar, dass Systeme mit Partikeln und/oder Fasern ein disperses System darstellen, die aus einer unzählbaren Menge von einzelnen, individuellen Partikeln bestehen. Es ist daher im Bereich der mechanischen Verfahrenstechnik üblich, derartige Systeme neben der chemischen Zusammensetzung durch die Form und Größe der Partikel zu beschreiben. Da die einzelnen Partikel üblicherweise unregelmäßig geformt sind, ist es allgemein üblich, statistische Größen, wie beispielsweise Feret oder Martin Durchmesser, zu berechnen.

Für die Beschreibung von Fasern ist die Verwendung eines statistisch ermittelten mittleren Partikeldurchmessers nicht sinnvoll. Üblicherweise werden Fasern als regelmäßig geformte Partikel gesehen, die einem Zylinder entsprechen. Für eine ausreichende Beschreibung sind daher Durchmesser und Höhe des Zylinders ausreichend. Dazu kann für jeden der beiden Parameter - Faserlänge und Faserdurchmesser - ein eigener statistischer Mittelwert angegeben werden sowie gegebenenfalls jeweils eine Verteilungsdichtefunktion bzw. auch eine Verteilungssumme ermittelt werden.

Die Tatsache, dass es bei Fasern nicht sinnvoll ist, einen mittleren Durchmesser anzugeben, erschwert auch eine aussagekräftige Charakterisierung. Die meisten Analysemethoden sind für mehr oder weniger sphärische Partikel ausgelegt und große Abweichungen von der runden Form führen zu unbrauchbaren Resultaten. Dies gilt zum Beispiel für eine Siebanalyse, die gemäß dem Stand der Technik mittels Vibrationssieben oder auch mittels Luftstrahlsieb durchgeführt werden kann. Relativ lange Fasern können überhaupt nicht gesiebt werden, da die Fasern formschlüssige Agglomerate bilden. Einzelne Fasern dieser Agglomerate können dann natürlich nicht durch die Maschen des Siebes fallen, auch wenn dies geometrisch möglich wäre (das heißt Maschenweite ist größer als Faserdurchmesser). Kurze Fasern neigen weniger zu Agglomeration und können somit ein Sieb passieren, wenn der Faserdurchmesser unter der Maschenweite des Siebes liegt. Eine Faser kann jedoch nur dann das Sieb passieren, wenn die Faserachse mehr oder weniger normal zur Siebfläche ausgerichtet ist. Die Wahrscheinlichkeit einer Faserausrichtung normal zur Siebfläche durch den Energieeintrag mittels Vibration (Vibrationssieb) oder Luftbewegung (Luftstrahlsieb) ist umso höher, je kürzer die Faser ist. Die Faserlänge beeinflusst somit lediglich die notwendige Siebdauer. Auch eine dem Stand der Technik entsprechende Charakterisierungsmethode stellt die Laserbeugung dar. In diesem Fall erhält man einen mittleren Durchmesser, jedoch keinerlei Aussage über die entsprechenden Faserlängen und Faserdurchmesser.

Aus diesem Grund erfolgt eine exakte Bestimmung der Fasergeometrie mittels mikroskopischer Verfahren, bei denen eine bestimmte Anzahl von Fasern vermessen wird. So schreibt die Berufsgenossenschaftliche Zentrale für Sicherheit und Gesundheit (BGZ) ein Verfahren zur Bestimmung lungengängiger Fasern (BGI 505-31 von April 2004) vor, bei dem Fasern unter dem Lichtmikroskop gezählt werden. Derartige Verfahren sind sehr genau und können auch für Schiedsanalysen angewandt werden. Nachteilig ist jedoch ein enormer Aufwand trotz einer relativ geringen Anzahl an ausgewerteten Fasern (100 Stück).

Im Bereich der Papier- und Zellstoffindustrie wurden in letzter Zeit Geräte entwickelt, die speziell für kurze Fasern konzipiert sind und neben anderen Parametern auch die Faserlänge und den Faserdurchmesser, sowie die entsprechenden Verteilungsdichtefunktionen ermitteln können. Unter dem Namen Morfi ist ein Gerät auf dem Markt, das von der Firma TECHPAP und dem CENTRE TECHNIQUE DU PAPIER (C.T.P.) entwickelt wurde. Die in wässriger Lösung suspendierte fasrige Probe wird durch eine Messzelle gepumpt, in der Fotos von einer Digitalkamera aufgenommen werden. Ein Softwaresystem wertet diese Bilder aus und kann Faserlängen bis zu 10 mm bestimmen. Es wurde festgestellt, dass die in dem erfindungsgemäßen Zuschlagstoff enthaltenen Fasern sehr gut mit diesem Morfi Analysesystem charakterisiert werden können. Die Probenvorbereitung und Messung erfolgt rasch und einfach und es kann in kurzer Zeit eine hohe Anzahl von Fasern vermessen werden (rund 100.000 Stück in 20 Minuten). Durch die sehr große Anzahl an Einzelfasern zeichnet sich dieses Analysesystem durch eine hohe statistische Sicherheit aus.

Wesentlich in Zusammenhang mit der Erfindung ist, dass der Zuschlagstoff rieselfähig ist, d.h. dass die Fasern nicht verfilzt sind oder Watteartige Strukturen bilden, da dies die weitere Verwendung wesentlich beeinträchtigen würde.

Überraschenderweise hat sich herausgestellt, dass es durch die Einstellung von Faseranteil und durch das Vorsehen eines anorganischen Zusatzmaterials möglich ist, ein hochwertiges Produkt zu erhalten. Der Faseranteil führt zu einer mechanischen Verbesserung der letztlich hergestellten Baumaterialien wobei hier ein Bereich zwischen 3% und 45% einzuhalten ist. Bei diesen Angaben handelt es sich um Massen-%. In der Kombination mit dem Zusatzmaterial wird eine besonders hohe Belastbarkeit in einem weiten Temperaturbereich erreicht.

Durch das erfindungsgemäße Verfahren ist es möglich, dass nunmehr auch eine Vielzahl von Abfallstoffen, im besonderen Shredderabfall, der durch Shreddern von Abfällen wie beispielsweise Altkraftfahrzeugen, Altelektronikgeräten sowie brauner und weißer Ware entsteht, nach einer erfindungsgemäßen Aufbereitung vorteilhaft als Zuschlagsstoff für bitumen- oder zementgebundene Baustoffe eingesetzt werden kann. Dadurch steht ein wesentlich größeres Spektrum an möglichen Ausgangsstoffen zur Verfügung, als dies bislang möglich war. Als weiterer Vorteil kann der erfindungsgemäß hergestellte Zuschlagstoff mehrere dem Stand der Technik entsprechende Additive gleichzeitig substituieren. Durch die erfindungsgemäße Aufbereitung eines geeigneten Abfalls bzw. durch Mischen verschiedener Abfälle kann ein Zuschlagstoff hergestellt werden, der Fasern, Füller, thermoplastische Kunststoffe und Elastomere enthält. Erfindungsgemäß ist es möglich, durch mechanische Prozessschritte die einzelnen Komponenten in die gewünschte Korngröße bzw. die gewünschte Faserlänge zu bringen.

Dieses Verfahren beseitigt nunmehr Nachteile bekannter Verfahren, mit denen Abfallstoffe bislang aufbereitet werden. Es ist nicht notwendig, eine aufwendige, jedoch zumeist unvollständige Trennung der einzelnen Abfallkomponenten zu erreichen.

Bei der erfindungsgemäßen Aufbereitung kommen ausschließlich mechanische Verfahren wie Schneidmahlung, Aeroklassieren oder Granulieren zum Einsatz, bei denen keine nennenswerten festen, flüssigen oder gasförmigen Abfälle generiert werden.

Erfindungsgemäß können verschiedene Abfälle, im Besonderen Shredderabfälle von Altkraftfahrzeugen, Altelektronikgeräten sowie braune und weiße Ware, eingesetzt werden. Es ist jedoch vorteilhaft, den Shredderabfall gemäß dem Stand der Technik vorzuseparieren. Dabei können leicht wieder verwertbare Komponenten wie Metalle oder Kunststoffgranulate abgetrennt und gewinnbringend vermarktet werden. Es ist besonders vorteilhaft eine Flusenfraktion als Ausgangsmaterial einzusetzen. Gegebenenfalls müssen verschiedene Abfälle eingesetzt werden, um die benötigten Konzentrationen der aktiven Komponenten zu erreichen. Gegebenenfalls können auch die Einzelkomponenten, sowohl als Neuals auch als Recyclingmaterial dem Zuschlagstoff beigemengt werden, um die erfindungsgemäße Zusammensetzung zu erreichen.

Erfindungsgemäß wird der Zuschlagstoff durch folgende Schritte erhalten. Die Reihenfolge der Aufbereitung kann je nach Art der aufzubereitenden Fraktion bzw. je nach gewünschter anschließender Anwendung variiert werden. Einzelne Schritte können gegebenenfalls auch weggelassen werden bzw. auch wiederholt zum Einsatz kommen. Alle Prozessschritte werden im Trockenverfahren durchgeführt.
- Mechanisches Zerkleinern der Abfälle; die Zerkleinerung kann vorteilhaft mittels einer Schneidmühle und/oder einer Prallmühle erfolgen.
- Sieben der Shredderabfälle; vorteilhaft können konventionelle Vibrationssiebe, Ultraschallsiebe oder Luftstrahlsiebe eingesetzt werden.
- Sichten / Klassieren der Shredderabfälle; vorteilhaft können Zick-Zack Sichter oder Abweiseradsichter zum Einsatz kommen.
- Granulieren der aufbereiteten Fraktionen.

Die Einstellung der erforderlichen Werte für den Faseranteil und das anorganische Zusatzmaterial erfolgt entweder durch eine Entsprechende Vorsortierung oder Auswahl des Ausgangsmaterials, durch Mischung unterschiedlicher Fraktionen von Ausgangsmaterial, durch Einstellung der Trennprozesse bei der Abtrennung der Leichtfraktion oder durch gezielte Zugabe von zusätzlichen Komponenten, wie etwa Gesteinsmehl o. dgl.

Der mit dem erfindungsgemäßen Verfahren hergestellte Zuschlagstoff kann bei der Herstellung von Beton oder Asphalt eingesetzt werden.

Beton ist ein im kalten Zustand hergestelltes Gemisch aus Zement (hydraulisches Bindemittel), Gesteinskörnung (Sand und Kies oder Splitt) und Wasser. Er kann außerdem Betonzusatzstoffe und Betonzusatzmittel enthalten.

Der Zement dient als Bindemittel, um die anderen Bestandteile zusammenzuhalten. Die Festigkeit des Betons entsteht durch Auskristallisierung der Klinkerbestandteile des Zements, wodurch sich kleinste Kristallnadeln bilden, die sich fest ineinander verzahnen. Das Kristallwachstum hält über Monate an, sodass die endgültige Festigkeit erst lange nach dem Betonguss erreicht wird. Es wird aber, wie in der DIN 1164 (Festigkeitsklassen von Zement), angenommen, die Normfestigkeit bei normalen Temperatur- und Feuchtigkeitsbedingungen nach 28 Tagen erreicht.

Üblicherweise enthält Beton auch einen so genannten Füller. Unter Füller versteht man ein Gesteinsmehl, wie etwa Quarzmehl oder Kalksteinmehl, das Korngrößen von unter 125 µm aufweist (DIN EN 12620).

Es entspricht dem Stand der Technik, dass dem Beton zur Verbesserung der Zugfestigkeit und der Duktilität, und damit des Bruch- und Rissverhaltens, Fasern zugegeben werden. Diese Fasern sind in der Matrix eingebettet. Sie wirken als Bewehrung. Bei höheren Zugbeanspruchungen treten Risse im Beton auf. Durch die Verwendung eines Faserbetons werden diese in viele, sehr feine und damit normalerweise unschädliche Risse aufgeteilt. Üblicherweise werden Glasfasern, Stahlfasern, Naturfasern und synthetische Polymerfasern eingesetzt (z.B.: WO 0204378 A, DE 100 30 617 A, DE 39 32 908 A, EP 1 518 840 A). Je nach Faserart und Anwendung weisen die eingesetzten Fasern Durchmesser im Bereich von 10 bis 50 µm bei Faserlängen von 10 bis 60 mm auf. Üblicherweise werden neuwertige Materialien für diesen Zweck verwendet, die relativ kostspielig sind und den Werkstoff Beton nicht unerheblich verteuern.

Es entspricht dem Stand der Technik, dem Beton weitere Zusätze beizumischen, um spezielle Eigenschaften zu erzielen. So werden thermoplastische Kunststoffe und/oder Elastomere eingesetzt (z.B.: WO 2002/062719 A, EP 1 026 132 A). Es ist ferner bekannt, dass auch entsprechend zusammengesetzte Abfallstoffe für diese Zwecke eingesetzt werden, um die hohen Kosten für die Zusätze einzusparen.

Es ist weiters bekannt, Abfallstoffe als Zusatz zu Beton einzusetzen. So wird in der Fachliteratur beschrieben (G. J. Xu, D. F. Watt, P. P. Hudec, J. Mater. Process. Techn. 48, 385-390, 1995), dass Shredderabfälle zur Energiegewinnung pyrolisiert werden und die Rückstände vorteilhaft dem Beton beigemischt werden können. Nachteilig dabei ist jedoch, dass bei den Pyrolysevorgängen Abgase entstehen, die wiederum eine aufwendige und teure Gasreinigung erfordern.

Asphalt bezeichnet eine bei hoher Temperatur hergestellte Mischung aus Bitumen (Bindemittel) und Gesteinskörnung (Füller, Sand und Kies oder Splitt). Asphalt kann außerdem Zusatzstoffe enthalten. Nach Abkühlen auf Gebrauchstemperatur ist Asphalt ein weitgehend starrer Baustoff.

Üblicherweise enthält Asphalt noch einen so genannten Füller, der eine Korngröße von unter 90 µm, bei einer breiten Korngrößenverteilung, aufweist (DIN 55946). Der Anteil an diesem Füller beträgt je nach Art des Asphalts bis zu etwa 15 %.

Es ist Stand der Technik, dem Bitumen verschiedene Polymere zuzusetzen. Dabei kommen vor allem Thermoplaste (z.B. Polyethylen, Polypropylen), Elastomere (z.B. Polybutadien, Naturkautschuk) und thermoelastische Kunststoffe (z.B. Styrol-Butadien-Styrol Blockcopolymer) zum Einsatz (siehe z.B. GESTRATA, 1996). Die Vorteile solcher Modifikationsmittel sind eine Verbesserung der rheologischen und elastischen Bitumeneigenschaften, eine Erhöhung der Viskosität bei Gebrauchstemperatur und somit eine Verbesserung der Asphalteigenschaften, wie etwa die Erhöhung der Widerstandsfähigkeit gegen Spurrinnenbildung. Der entscheidende Nachteil von polymermodifiziertem Bitumen ist der im Vergleich zu konventionellem Bitumen hohe Preis.

Es ist daher ebenfalls Stand der Technik, dem Bitumen Polymere ganz oder teilweise aus Altstoffen zuzusetzen, da dadurch die Kosten drastisch verringert werden können (z.B.: EP 0 448 425 A).

Auch im Bereich Bitumenwerkstoffe entspricht es dem Stand der Technik, dass Faserzusätze die Produkteigenschaft verbessern. Insbesondere bei Splittmastixasphalt, einer speziellen Sorte des Asphalts für Deckschichten mit einem höheren Bitumen- und Splittgehalt mit erhöhter Haltbarkeit für hohe Verkehrsbelastungen wie auf Autobahnen, müssen allerdings stabilisierende Zusätze beigemischt werden. Üblicherweise werden Zellulose- oder synthetische Fasern zwischen 0,3 und 1,5% der Gesamtmasse eingesetzt (z.B.: EP 0 313 603 A). Der Zusatz dieser Fasermaterialien ist teuer und rechtfertigt einen Einsatz nur für hoch belastete Fahrbahnen. Der mit dem erfindungsgemäßen Verfahren hergestellte Zuschlagstoff ist hingegen kostengünstig.

Von besonderem Vorteil im Hinblick auf die Qualität des Endprodukts ist es, wenn das Zusatzmaterial eine maximale Korngröße von weniger als 750 µm, vorzugsweise von weniger als 400 µm aufweist.

Besonders bevorzugt ist es, wenn das Zerkleinern bis zu einer längengewichteten mittleren Faserlänge von 10 mm, vorzugsweise von 2 mm durchgeführt wird. Wie oben ausgeführt, wird die längengewichtete mittlere Faserlänge mit dem Morfi Analysesystem bestimmt.

Eine weitere Qualitätsverbesserung kann dadurch erreicht werden, dass der Massenanteil thermoplastischer Kunststoffmaterialien auf einen Wert zwischen 5% und 60%, vorzugsweise zwischen 25% und 45% eingestellt wird und dass der Massenanteil von Elastomeren bis auf einen Wert zwischen 3% und 40%, vorzugsweise zwischen 10% und 28% eingestellt wird.

Weiters betrifft die vorliegende Erfindung einen Zuschlagstoff für die Herstellung von Baumaterialien, der in im Wesentlichen rieselfähigem Zustand vorliegt, enthaltend eine faserhaltige Altstofffraktion. Erfindungsgemäß ist dieser Zuschlagstoff gekennzeichnet durch einen Faseranteil zwischen 3% und 45%, vorzugsweise zwischen 5% und 25%, und besonders vorzugsweise von etwa 7% bis 12% und durch einen Massenanteil zwischen 2% und 25%, vorzugsweise zwischen 2% und 10% eines feinkörnigen anorganischen Zusatzmaterials.

Weitere Aspekte der Erfindung betreffen einen Asphalt, bestehend aus Bitumen und Gesteinsfüllung und mindestens einem Zuschlagstoff der oben beschriebenen Art, sowie einen Beton, bestehend aus Zement, Gesteinskörnung und Wasser sowie mindestens einem Zuschlagstoff der oben beschriebenen Art.

In der Folge werden die in den Figuren dargestellten Ausführungsvarianten näher beschrieben. Es zeigen:
- Fig. 1: ein schematisches Diagramm des erfindungsgemäßen Verfahrens;
- Fig. 2: eine typische Verteilungsdichtefunktion des Faserdurchmessers der im Zuschlagstoff enthaltenen Faserfraktion;
- Fig. 3: eine typische Verteilungsdichtefunktion der Faserlänge der im Zu- schlagstoff enthaltenen Faserfraktion;
- Fig. 4: Wöhlerlinien zur Beschreibung des Ermüdungsverhaltens;
- Fig. 5: ein Diagramm, das die Zugfestigkeitsreserve zur Beschreibung des Tieftemperaturverhaltens darstellt; und
- Fig. 6: ein Diagramm, das Kriechimpulskurven zur Beschreibung des Ver- formungsverhaltens darstellt.

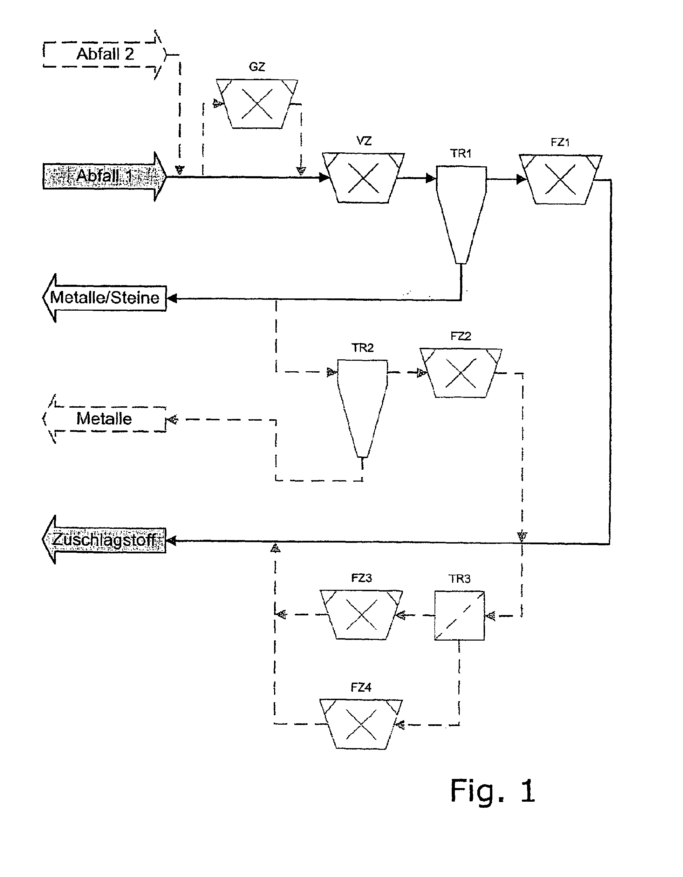

Fig. 1 zeigt ein typisches Beispiel einer Anordnung von mechanischen Verfahrensschritten, um den erfindungsgemäßen Zuschlagstoff herzustellen. Die einzelnen Prozessschritte sind in Tabelle 1 näher erläutert.

Dabei wird im einfachsten Fall ein einziger Abfall (Abfall 1) eingesetzt, der in einer Vorzerkleinerungsstufe (VZ) soweit zerkleinert wird, damit in der anschließenden Abtrennung (TR1) Metalle und Steine bzw. andere relativ grobe anorganische Komponenten abgetrennt werden können. Die Abtrennung dieser Stoffe ermöglicht nunmehr die anschließende Feinzerkleinerung (FZ1), um den erfindungsgemäßen Zuschlagstoff in der benötigten Feinheit herzustellen. Die Anwesenheit von sehr kleinen, anorganischen oder metallischen Partikeln stört die Feinzerkleinerung nicht. Dieser Feinzerkleinerungsschritt kann in einem oder aber auch in mehreren Schritten durchgeführt werden.

Alternativ können auch ein weiterer Abfall (Abfall 2) oder eventuell auch mehrere weitere Abfälle zum Einsatz kommen. Je nach Beschaffenheit der Abfallstoffe kann es notwendig sein, einen oder mehrere Grobzerkleinerungsschritte (GZ) vorzuschalten.

Die im Trennschritt 1 (TR1) abgesonderten relativ groben metallischen oder anorganischen Anteile (z.B.: Steine) können direkt einer weiteren Verwertung oder Deponierung zugeführt werden. Alternativ kann durch einen weiteren Trennschritt (TR2) eine Absonderung von Metallen erreicht werden, die direkt einem Metallrecyclingprozess zugeführt werden können. Parallel dazu kann die an metallischen Anteilen abgereicherte, zu überwiegenden Anteilen aus anorganischen Bestandteilen bestehende Fraktion, durch einen weiteren Zerkleinerungsschritt (FZ2) zerkleinert werden und dem Zuschlagstoff beigefügt werden.

Gegebenenfalls kann es notwendig sein, den Zuschlagstoff nach der Feinzerkleinerung (FZ1) noch weiter zu zerkleinern, als dies mit konventionellen Maschinen möglich ist. Dazu wird der Zuschlagstoff über eine Trenneinrichtung (TR3) in eine Faserfraktion und eine Nicht-Faserfraktion getrennt. Anschließend kann jede Fraktion für sich mittels weiterer auf die jeweiligen Fraktionen abgestimmten Zerkleinerungsaggregaten (FZ3 und FZ4) weiter zerkleinert werden. Durch Vereinigung beider Fraktion aus FZ3 und FZ4 wird anschließend der Zuschlagstoff erhalten.

**Tabelle 1.: Beispiele einer Verkettung von mechanischen Prozessschritten zur Herstellung des erfindungsgemäßen Zuschlagstoffes (siehe Skizze in Fig. 1).**

| Abk. | Prozess | Vorteilhafte Maschine | Bemerkung |
|---|---|---|---|
| GZ | Grobzerkleinerung | Zahnwalzenbrecher Universalzerkleinerer | |
| VZ | Vorzerkleinerung | Rotorschere Schneidmühle (langsam) | Eventuell auch in mehreren Stufen |
| TR1 | Trennung 1 | Windsichter Zick-Zack-Sichter Setzmaschine Lufttrenngerät | Abtrennung Metalle und anorganische Komponenten (z.B.: Steine) |
| FZ1 | Feinzerkleinerung 1 | Schneidmühle Vielmessermühle | |
| TR2 | Trennung 2 | Abweiseradsichter | Trennung Metalle (Wertstoff) und anorganische Komponenten (Rückführung Prozess) |
| FZ2 | Feinzerkleinerung 2 | Schlagmühle Gegenstrahlmühle | Feinzerkleinerung der anorganischen Komponenten (z.B.: < 125 µm) |
| TR3 | Trennung 3 | Vibrationssieb Luftstrahlsieb | Trennung Faser - Nicht-Fasern |
| FZ3 | Feinzerkleinerung 3 | Schlagmühle Gegenstrahlmühle | Feinmahlen von Nicht-Fasern |
| FZ4 | Feinzerkleinerung 4 | Feinschneidmühle | Feinschneiden der Fasern |

Die Einstellung der oben geforderten Werte für den Faseranteil und den Massenanteil des Zusatzmaterials erfolgt einerseits durch ein geeignetes Mischungsverhältnis zwischen Abfall 1 und Abfall 2, sowie gegebenenfalls weiterer Abfälle die sich in ihrer Zusammensetzung ausreichend unterscheiden müssen, und andererseits durch die Einstellung der Trennstufen TR1, TR2 und TR3. Darüber hinaus kann durch eine gezielte Zugabe von feinen Gesteinen oder dgl. die Zusammensetzung in der gewünschten Weise beeinflusst werden.

Die erfindungsgemäße Aufbereitung hat auch zum Ziel, eine gute Rieselfähigkeit, gute Dosierbarkeit und/oder eine geringe Neigung zur Bildung von Agglomeraten zu erreichen. Durch eine entsprechende Einkürzung werden formschlüssige Agglomerationen durch vorhandene faserförmige Bestandteile weitgehend unterbunden. Dabei ist es notwendig, eventuell vorhandene Reste von Geweben und Zwirnen nahezu vollständig zu desintegrieren. Die im Abfallstoff vorhandenen Fasern werden auf eine Faserlänge gekürzt, wie sie typisch für den Bereich Flock ist. Vorteilhaft liegt die mittlere längengewichtete Faserlänge im Bereich von 0,3 bis 2,5 mm. Dadurch wird eine ausreichende Rieselfähigkeit und Dosierbarkeit gewährleistet, wodurch eine technisch einfache Weiterverarbeitung des Zuschlagstoffes erreicht werden kann. Noch kürzere Faserlängen verbessern die Rieselfähigkeit noch weiter, zeigen jedoch keinen ausreichenden Armierungseffekt in der erfindungsgemäßen Verwendung in Baustoffen.

Um einen vorteilhaften Einsatz sicher zu stellen, müssen dem Abfall gegebenenfalls anorganische Stoffe zugesetzt werden. Dabei können feine Gesteine mit Korngrößen von unter 750 µm, vorteilhaft unter 400 µm, besonders vorteilhaft unter 125 µm zugesetzt werden. Es ist erfindungsgemäß vorgesehen, dass auch anorganische Abfälle im geeigneten Korngrößenbereich eingesetzt werden können. Der Massenanteil der anorganischen Komponenten muss im Bereich von 2% bis 25% liegen.

Der Anteil der thermoplastischen Kunststoffe bzw. Elastomere muss gegebenenfalls durch Zugabe von Thermoplasten bzw. Elastomeren korrigiert werden. Der Massenanteil der thermoplastischen Kunststoffe liegt dabei zwischen 5 und 60 %, der Elastomere zwischen 3 und 40%. Vorteilhaft werden thermoplastische Kunststoffe und Elastomere aus anderen Recyclingprozessen eingesetzt.

Besonders vorteilhaft ist es jedoch, solche Abfälle einzusetzen, die bereits so zusammengesetzt sind, dass durch die mechanische Aufbereitung ohne weitere Zusätze ein rieselfähiges Produkt hergestellt werden kann, das hinsichtlich Faser / Nichtfaserverhältnis, Anteil an anorganischen und thermoplastischen Komponenten sowie Elastomeranteil den erforderlichen Spezifikationen genügt. Erfindungsgemäß können auch verschiedene Abfälle vor, während oder nach der Aufbereitung gemischt werden, um die erfindungsgemäße Zusammensetzung des Zuschlagstoffes zu erreichen.

Ein weiterer Vorteil der erfindungsgemäßen Aufbereitung liegt darin, dass eine Fraktion erhalten wird, die bis zur vorbestimmten weiteren Verwendung gelagert, transportiert und zu einem frei wählbaren Zeitpunkt weiter verarbeitet werden kann.

Der erfindungsgemäß aufbereitete Abfall kann nunmehr vorteilhaft zur Herstellung von formbaren Belägen wie Beton, Asphalt oder vorgefertigten Produkten, wie Bahnen, Platten oder Schindeln verarbeitet werden. Dabei wird der Zuschlagstoff als Additiv zugesetzt und kann andere Additive, die dem Stand der Technik entsprechen, ersetzen.

### Ausführungsbeispiel

Es wurden 300 kg von einer, bereits gemäß dem Stand der Technik vorsortierten, Shredderleichtfraktion, einer so genannten Flusenfraktion, in mehreren Schritten mittels mechanischer Verfahren aufbereitet, um einen erfindungsgemäßen Zuschlagstoff herzustellen. In einem ersten Schritt wurde eine Vorzerkleinerung durchgeführt. Dadurch wurde das inhomogene Ausgangsmaterial hinsichtlich Korngröße deutlich vereinheitlicht. Zusätzlich konnten Agglomerate aufgelöst werden. Dieser Schritt wurde mit einer langsam laufenden Schneidmühle durchgeführt. Die entsprechenden Prozessparameter sind in Tabelle 2 angeführt.

In einem zweiten Prozessschritt wurden mittels eines Sichtverfahrens noch enthaltene Metalle und anorganische Komponenten entfernt. Als dafür geeignetes Aggregat wurde ein Zickzacksichter eingesetzt. Die Parameter bei der Sichtung wurden entsprechend dem Stand der Technik so gewählt werden, dass Metalle und anorganisch Komponenten mit Korngrößen von über 0,5 mm entfernt wurden.

Die Leichtfraktion wurde in einem weiteren Zerkleinerungsschritt mittels einer Schneidmühle aufbereitet, zum erfindungsgemäßen Zuschlagstoff zu gelangen. Die verwendeten Prozessparameter sind Tabelle 3 zu entnehmen.

**Tabelle 2.: Prozessparameter zur Vorzerkleinerung von Abfall in einer Haufwerksschneidmühle.**

| | |
|---|---|
| Rotordurchmesser | 100 mm |
| Rotorbreite | 26 mm |
| Anzahl Statormesser | 3 Stück |
| Anzahl Rotormesser | 2 Stück |
| Abstand zwischen Rotor- und Statormesser | 0,4 mm |
| Motorleistung Mühle | 4,0 kW |
| Drehzahl Rotor | 500 min⁻¹ |
| Motorleistung Gebläse | 1,5 kW |
| Luftdurchsatz | 180 Nm³/h |
| Maschenweite Sieb | 3 mm, Rundloch |
| Durchsatz | 54 kg/h |

Die so erhaltene Fraktion kann nunmehr vorteilhaft als Zuschlagstoff eingesetzt werden. Es zeigte sich, dass die Fraktion in etwa 10 % Massenanteil an Fasern aufweist, und der restliche Anteil aus feinen Partikeln besteht. Eine Siebanalyse ergab, dass etwa 90 % der Partikel eine Korngröße von unter 750 µm aufwiesen. Eine genauere Analyse zeigte, dass etwa 3 % anorganische Anteile enthalten waren und der Anteil an thermoplastischen Kunststoffen rund 40 % ausmachten. Weiters waren noch ca. 25 % Elastomere enthalten. Die übrigen Anteile waren hauptsächlich andere Arten von Kunststoffen.

**Tabelle 3.: Prozessparameter zur Vorzerkleinerung von Abfall in einer Haufwerksschneidmühle.**

| | |
|---|---|
| Rotordurchmesser | 260 mm |
| Rotorbreite | 410 mm |
| Anzahl Statormesser | 6 Stück |
| Anzahl Rotormesser | 6 Stück |
| Abstand zwischen Rotor- und Statormesser | 0,25 mm |
| Motorleistung Mühle | 15,0 kW |
| Drehzahl Rotor | 2 500 min⁻¹ |
| Motorleistung Gebläse | 1,5 kW |
| Luftdurchsatz | 150 Nm³/h |
| Maschenweite Sieb | 0,3 mm, Rundloch |
| Durchsatz | 78 kg/h |

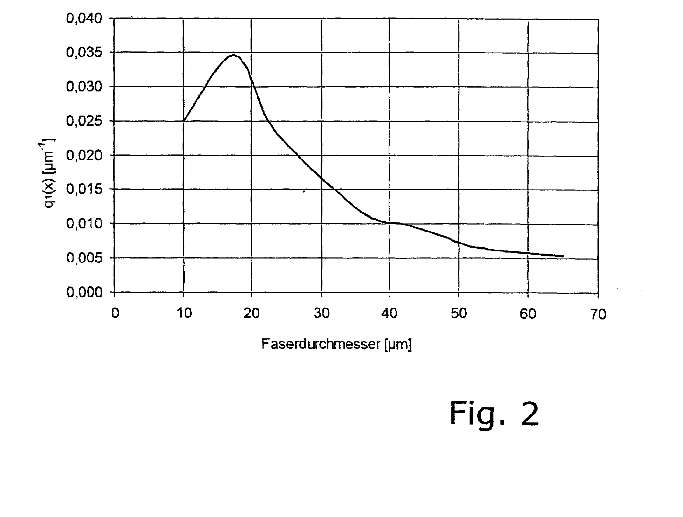

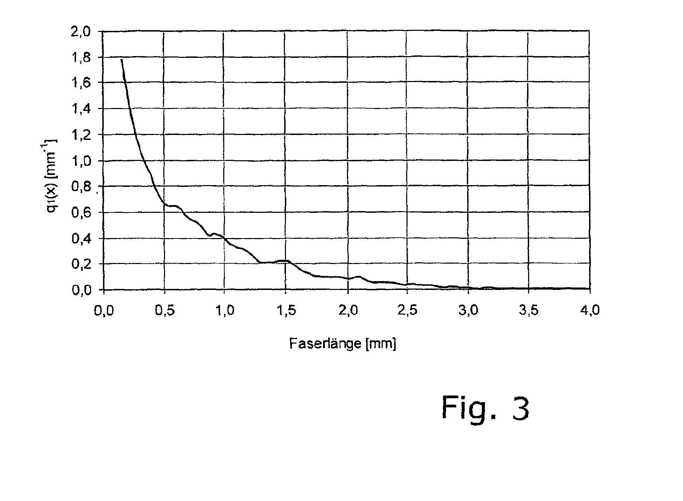

Eine Analyse der abgetrennten Fasern machte deutlich, dass die Fasern einen Durchmesser aufwiesen, der typisch für Chemiefasern ist. Dies zeigt, dass die erfindungsgemäße Aufbereitung lediglich die Faserlänge einkürzt, ohne jedoch die Fasern zu fibrillieren. Tabelle 4 gibt die Mittelwerte für Faserlänge und Faserdurchmesser wieder. Die entsprechenden Verteilungssummen für Faserlänge und Faserdurchmesser sind in Fig. 2 und Fig. 3 dargestellt.

**Tabelle 4.: Statistische Kenndaten der im erfindungsgemäßen Zuschlagstoff (Anwendungsbeispiel) enthaltenen Faserfraktion gemäß Untersuchung mit dem Morfi Analysegerät.**

| | Faserlänge | Faserdurchmesser |
|---|---|---|
| Arithmetisches Mittel | 0,73 µm | 27,9 µm |
| Längengewichtete Länge | 1,04 µm | - |
| Median Wert d₅₀ | 0,50 µm | 21,2 µm |

Der erfindungsgemäße Zuschlagsstoff wurde in der Folge bei der Herstellung eines Asphalts für den Straßenbau verwendet. Dabei wurde ein hochstandfester Splittmastixasphalt des Typs SMA 11 50/70, der heute in Österreich als Deckschichtmaterial vorzugsweise bei hochbelasteten Straßen zum Einsatz kommt, mit dem erfindungsgemäßen Zuschlagsstoff modifiziert. Dieser wurde in das Asphaltmischgut im Trocken-Verfahren eingebracht. Es erfolgte keine Zugabe von Zellulosefasern (z.B. VIATOP 80+), wie dies beim konventionellen Asphalt dieses Typs als Trägermaterial für Bitumen notwendig ist.

Die Verhaltenseigenschaften eines Asphaltmischguts im Betriebszustand der Straße (sog. Gebrauchsverhalten) kann im Labor mit Hilfe sog. gebrauchsverhaltensorientierter Asphaltprüfungen (GVO Asphaltprüfungen) am Mischgut prognostiziert werden. Dabei wird das Gebrauchsverhalten definiert durch die Beständigkeit des Asphalts gegen Ermüdung (akkumulierte Schädigung durch wiederholte Verkehrsbeanspruchung), gegen Kälterissbildung und gegen bleibende Verformung (Spurrinnenbildung).

Die GVO Asphaltprüfungen umfassen folgende Versuchstypen: (i) Ermüdungsversuch zur Bestimmung der Anzahl an zulässigen Lastwechsel bei konstanter Dehnung bis zum Eintritt der Materialermüdung als charakteristisches Maß für die Ermüdungsbeständigkeit; (ii) Abkühl- und Kältezugversuch (kurz Tieftemperaturversuche) zur Bestimmung der Zugfestigkeitsreserve als charakteristisches Maß für die Kälterissbeständigkeit; (iii) zyklischer Druckkriechversuch zur Bestimmung der kumulierten axialen Stauchung infolge einer dynamischen halbsinusförmigen Beanspruchung als charakteristisches Maß für die Verformungsresistenz.

Anhand der oben genannten GVO Asphaltprüfungen wurde das Gebrauchsverhalten des durch den erfindungsgemäßen Zuschlagsstoff modifizierten Asphalts bestimmt. Zu Vergleichszwecken wurde mit Hilfe derselben Prüfungen und unter denselben Prüfbedingungen auch das Gebrauchsverhalten eines konventionell hergestellten Asphalts gleichen Typs bestimmt.

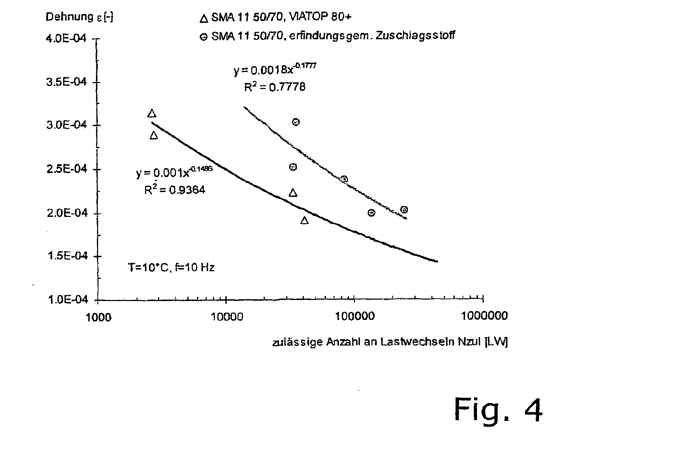

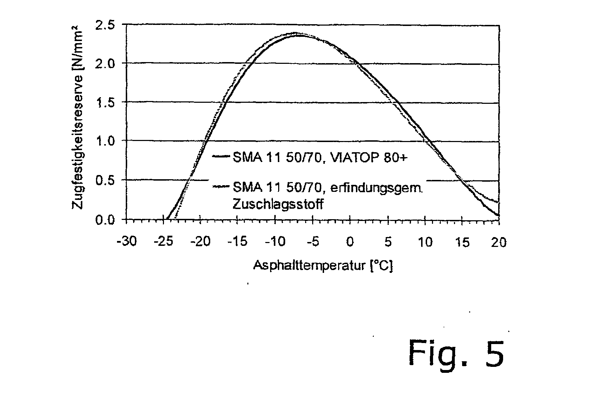

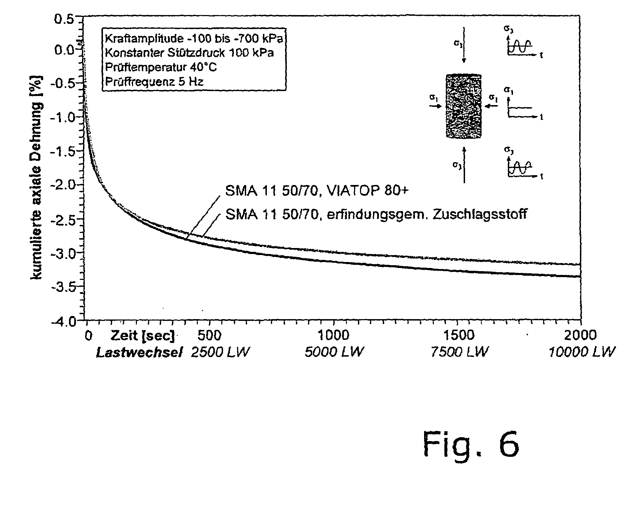

Fig. 4 zeigt die Ergebnisse der Ermüdungsversuche für den mit dem erfindungsgemäßen Zuschlagsstoff modifizierten Asphalt (SMA 11 50/70, erfindungsgemäßem Zuschlagsstoff) und für den konventionellen Asphalt (SMA 11 50/70, VIATOP 80+). Analog sind in den Fig. 5 und 6 die Ergebnisse der Tieftemperaturversuche (Fig. 5) und der zyklischen Druckkriechversuche (Fig. 6) für die beiden Asphalte vergleichend einander gegenübergestellt.

Das Ergebnis der GVO Asphaltprüfungen kann folgenderweise zusammengefasst werden. Der Unterschied im Verlauf der für die geprüften Asphalte resultierenden Kurven der Zugfestigkeitsreserve (vgl. Fig. 5) und der Unterschied im Verlauf der Kriechimpulskurven (vgl. Fig. 6) liegt jeweils innerhalb der versuchsbedingten Streuung der Messergebnisse. Die Kurvenverläufe sind somit als gleichwertig anzusehen. Die Ermüdungskurven der beiden Asphalte unterscheiden sich voneinander geringfügig (vgl. Fig. 4), wobei der mit dem erfindungsgemäßen Zuschlagsstoff modifizierte Asphalt eine vergleichsweise höhere Ermüdungsbeständigkeit aufweist.

Das zu erwartende Gebrauchsverhalten des mit dem erfindungsgemäßen Zuschlagsstoff modifizierten Asphalt kann im Vergleich zum konventionellen Asphalt als gleichwertig in Bezug auf das Tieftemperatur- und Verformungsverhalten bewertet werden, in Bezug auf das Ermüdungsverhalten sogar als vorteilhaft.

Die Prüfergebnisse belegen somit eine vorteilhafte Verwendung des erfindungsgemäßen Zuschlagsstoffs als Modifikationsmittel für den geprüften Asphalt.

## Patentansprüche

1. Verfahren zur Herstellung eines Zuschlagstoffs für die Herstellung von Baumaterialien bei dem ein Ausgangsmaterial, das mindestens eine faserhaltige Altstofffraktion enthält, von Schwerstoffen befreit und zerkleinert wird, um einen im Wesentlichen rieselfähigen Zuschlagstoff zu erhalten, **dadurch gekennzeichnet, dass** als Ausgangsmaterial eine Shredderleichtfraktion verwendet wird und dass der Faseranteil in Massen-% zwischen 3% und 45%, vorzugsweise zwischen 5% und 25% und besonders vorzugsweise zwischen 7% und 12% eingestellt wird und dass ein Massenanteil zwischen 2% und 25%, vorzugsweise zwischen 2% und 10%, und besonders vorzugsweise zwischen 3% und 8% eines feinkörnigen anorganischen Zusatzmaterials mit einer Korngröße von weniger als 750 µm eingestellt wird.

2. Verfahren nach Anspruch 1, **dadurch gekennzeichnet, dass** das Zusatzmaterial eine maximale Korngröße von weniger als 400 µm aufweist.

3. Verfahren nach einem der Ansprüche 1 oder 2, **dadurch gekennzeichnet, dass** das Zerkleinern bis zu einer längengewichteten mittleren Faserlänge von 10 mm, vorzugsweise von 2 mm durchgeführt wird.

4. Verfahren nach einem der Ansprüche 1 bis 3, **dadurch gekennzeichnet, dass** der Zuschlagstoff thermoplastische Kunststoffmaterialien enthält und dass der Massenanteil dieser thermoplastischen Kunststoffmaterialien auf einen Wert zwischen 5% und 60%, vorzugsweise zwischen 25% und 45% und besonders vorzugsweise zwischen 35% und 40% eingestellt wird.

5. Verfahren nach einem der Ansprüche 1 bis 4, **dadurch gekennzeichnet, dass** der Zuschlagstoff Elastomere enthält und dass der Massenanteil dieser Elastomere auf einen Wert zwischen 3% und 40%, vorzugsweise zwischen 10% und 28% und besonders vorzugsweise zwischen 15% und 25% eingestellt wird.

6. Zuschlagstoff für die Herstellung von Baumaterialien, der in im Wesentlichen rieselfähigem Zustand vorliegt, enthaltend eine faserhaltige Altstofffraktion, **gekennzeichnet durch** einen Faseranteil in Massen-% zwischen 3% und 45%, vorzugsweise zwischen 5% und 25% und besonders vorzugsweise zwischen 7% und 12%, der im Wesentlichen aus einer Shredderleichtfraktion stammt, und **durch** einen Massenanteil zwischen 2% und 25%, vorzugsweise zwischen 2% und 10% und besonders vorzugsweise zwischen 3% und 8% eines feinkörnigen anorganischen Zusatzmaterials mit einer Korngröße von weniger als 750 µm.

7. Zuschlagstoff nach Anspruch 6, **dadurch gekennzeichnet, dass** das Zusatzmaterial eine maximale Korngröße von weniger als 400 µm aufweist.

8. Zuschlagstoff nach einem der Ansprüche 6 oder 7, **dadurch gekennzeichnet, dass** die längengewichtete mittlere Faserlänge zwischen 2 mm und 10 mm beträgt.

9. Zuschlagstoff nach einem der Ansprüche 6 bis 8, **dadurch gekennzeichnet, dass** Kunststoffmaterialen enthalten sind, deren Massenanteil thermoplastischer Kunststoffmaterialien zwischen 5% und 60%, vorzugsweise zwischen 25% und 45% und besonders vorzugsweise zwischen 35% und 40% beträgt.

10. Zuschlagstoff nach einem der Ansprüche 6 bis 9, **dadurch gekennzeichnet, dass** Elastomere enthalten sind, deren Massenanteil von Elastomeren zwischen 3% und 40%, vorzugsweise zwischen 10% und 28% und besonders vorzugsweise zwischen 15% und 25% beträgt.

11. Asphalt, bestehend aus Bitumen und Gesteinsfüllung und mindestens einem Zuschlagstoff, **dadurch gekennzeichnet, dass** ein Zuschlagstoff nach einem der Ansprüche 6 bis 10 enthalten ist.

12. Beton, bestehend aus Zement, Gesteinskörnung und Wasser sowie mindestens einem Zuschlagstoff, **dadurch gekennzeichnet, dass** ein Zuschlagstoff nach einem der Ansprüche 6 bis 10 enthalten ist.

## Claims

1. A method for producing an aggregate for the production of building materials, wherein a starting material containing at least one fibre-containing waste fraction has had heavy materials removed and been comminuted in order to obtain a substantially free-flowing aggregate, **characterised in that** a light shredded fraction is used as a starting material and the fibre content is set between 3% and 45%, preferably between 5% and 25%, and more preferably between 7% and 12%, and a mass fraction of between 2% and 25%, preferably between 2% and 10%, and more preferably between 3% and 8%, of a fine-grain inorganic additive with a grain size of less than 750 µm is set.

2. A method according to claim 1, **characterised in that** the additive has a maximum grain size of less than 400 µm.

3. A method according to one of the claims 1 or 2, **characterised in that** the comminution is performed up to a length-weighted mean fibre length of 10 mm, preferably 2 mm.

4. A method according to one of the claims 1 to 3, **characterised in that** the aggregate contains thermoplastic materials and the mass fraction of these thermoplastic materials is set to a value of between 5% and 60%, preferably between 25% and 45%, and more preferably between 35% and 40%.

5. A method according to one of the claims 1 to 4, **characterised in that** the aggregate contains elastomers and the mass fraction of these elastomers is set to a value of between 3% and 40%, preferably between 10% and 28%, and more preferably between 15% and 25%.

6. An aggregate for the production of building materials which is present in a substantially pourable form, containing a fibre-containing waste fraction, **characterised by** a fibre content of between 3% and 45%, preferably between 5% and 25%, and more preferably between 7% and 12%, which fibre content originates mainly from a light shredded fraction, and by a mass fraction of between 2% and 25%, preferably between 2% and 10%, and more preferably between 3% and 8%, of a fine-grain inorganic additive with a grain size of less than 750 µm.

7. An aggregate according to claim 6, **characterised in that** the additive has a maximum grain size of less than 400 µm.

8. An aggregate according to one of the claims 6 or 7, **characterised in that** the length-weighted mean fibre length is between 2 mm and 10 mm.

9. An aggregate according to one of the claims 6 to 8, **characterised in that** plastic materials are contained, the mass fraction of thermoplastic materials of which is between 5% and 60%, preferably between 25% and 45%, and more preferably between 35% and 40%.

10. An aggregate according to one of the claims 6 to 9, **characterised in that** elastomers are contained, the mass fraction of elastomers of which is between 3% and 40%, preferably between 10% and 28%, and more preferably between 15% and 25%.

11. Asphalt, consisting of bitumen and rock filling and at least one aggregate, **characterised in that** an aggregate according to one of the claims 6 to 10 is contained.

12. Concrete, consisting of cement, crushed rock and water, and at least one aggregate, **characterised in that** an aggregate according to one of the claims 6 to 10 is contained.

## Revendications

1. Procédé de fabrication d'un agrégat pour la production de matériaux de construction selon lequel, d'une matière première contenant au moins une fraction de vieux matériaux contenant des fibres, on élimine les matières lourdes et on réduit pour obtenir un agrégat qui peut pratiquement ruisseler,
procédé **caractérisé en ce que**
comme matière première, on utilise une fraction légère de produits déchiquetés et la teneur en fibres représente en pourcentage massique compris entre 3 % et 45 %, de préférence entre 5 % et 25 % et d'une manière particulièrement préférentielle, entre 7 % et 12 %, et
on règle une fraction massique comprise entre 2 % et 25 %, de préférence entre 2 % et 10 % et d'une manière particulièrement préférentielle, entre 3 % et 8 %, d'un additif minéral à grains fins ayant une granulométrie inférieure à 750 µm.

2. Procédé selon la revendication 1,
**caractérisé en ce que**
l'additif a une granulométrie maximale inférieure à 400 µm.

3. Procédé selon la revendication 1 ou 2,
**caractérisé en ce qu'**
on poursuit la réduction jusqu'à une longueur de phase moyenne pondérée de 10 mm, de préférence de 2 mm.

4. Procédé selon l'une des revendications 1 à 3,
**caractérisé en ce que**
l'agrégat contient des matières thermoplastiques et la teneur massique des matières thermoplastiques est fixée à une valeur comprise entre 5 % et 60 %, de préférence entre 25 % et 40 % et d'une manière particulièrement préférentielle entre 35 % et 40 %.

5. Procédé selon l'une des revendications 1 à 4,
**caractérisé en ce que**
l'additif contient des élastomères et la teneur massique des élastomères est réglée sur une valeur comprise entre 3 % et 40 %, et de préférence entre 10 % et 28 %, et d'une manière particulièrement préférentielle entre 15% et 25%.

6. Agrégat pour la production de matériaux de construction dans un état pratiquement susceptible de ruisseler, avec une fraction de vieux matériaux contenant des fibres,
**caractérisé par**
une teneur en pourcentage massique comprise entre 3 % et 45 %, de préférence entre 5 % et 25 % et d'une manière particulièrement préférentielle, entre 7 % et 12 % et qui provient principalement d'une fraction de produits déchiquetés et dont la teneur massique est comprise entre 2 % et 25 %, de préférence entre 2 % et 10 %, et d'une manière particulièrement préférentielle, entre 3 % et 8 % d'un additif minéral à grains fins, ayant une granulométrie inférieure à 750 µm.

7. Agrégat selon la revendication 6,
**caractérisé en ce que**
l'agrégat a une granulométrie maximale inférieure à 400 µm.

8. Agrégat selon la revendication 6 ou 7,
**caractérisé en ce que**
la longueur moyenne pondérée des fibres, est comprise entre 2 mm et 10 mm.

9. Agrégat selon l'une des revendications 6 à 8,
**caractérisé en ce qu'**
il contient des matières plastiques dont la teneur massique en matières plastiques thermoplastiques, est comprise entre 5 % et 60 %, de préférence entre 25 % et 45 % et d'une manière particulièrement préférentielle, entre 35 % et 40 %.

10. Agrégat selon l'une des revendications 6 à 9,
**caractérisé en ce qu'**
il comprend des élastomères dont la teneur massique est comprise entre 3 % et 40 %, de préférence entre 10 % et 28 % et d'une manière particulièrement préférentielle entre 15 % et 25 %.

11. Asphalte composé de bitume et d'une charge en graviers et d'au moins un agrégat,
**caractérisé en ce que**
l'agrégat correspond à l'une des revendications 6 à 10.

12. Béton composé de ciment, de grains minéraux et d'eau ainsi que d'au moins un agrégat,
**caractérisé en ce que**
l'agrégat correspond à l'une des revendications 6 à 10.
